(19) Europäisches Patentamt
European Patent Office
Office européen des brevets

(11) Publication number: **0 002 910**
**B1**

(12) **EUROPEAN PATENT SPECIFICATION**

(45) Date of publication of patent specification: **17.03.82**

(21) Application number: **78300824.6**

(22) Date of filing: **14.12.78**

(51) Int. Cl.³: **C 08 F 255/02,**
C 08 F 2/02, C 08 F 2/44
//(C08F255/02, 230/08)

(54) **Curable silane-modified ethylene polymer composition and shaped articles made therefrom.**

(30) Priority: **15.12.77 JP 151422/77**

(43) Date of publication of application:
**11.07.79 Bulletin 79/14**

(45) Publication of the grant of the patent:
**17.03.82 Bulletin 82/11**

(84) Designated Contracting States:
**DE FR GB NL**

(56) References cited:
**FR - A - 1 532 347**
**FR - A - 2 294 196**

(73) Proprietor: **SEKISUI KAGAKU KOGYO KABUSHIKI KAISHA**
**4-4 Nishitenma 2-chome Kita-ku**
**Osaka shi Osaka (JP)**

(72) Inventor: **Harayama, Hiroshi**
**1068-12, Minamigasa-cho**
**Kusatsu-shi Shiga-ken (JP)**
Inventor: **Shinkai, Ken**
**8-44, Koganeno 1-chome**
**Hirakata-shi Osaka-fu (JP)**
Inventor: **Takahashi, Hiroshi**
**1113-9, Sendano Shirooka-cho**
**Minamisaitama-gun Saitama-ken (JP)**
Inventor: **Mizusako, Masahiro**
**5725, Minamigata**
**Ibusuki-shi Kagoshima-ken (JP)**

(74) Representative: **Myerscough, Philip Boyd (GB) et al,**
**J.A. Kemp & Co. 14 South Square, Gray's Inn**
**GB-London WC1R 5EU (GB)**

**EP 0 002 910 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Curable silane-modified ethylene polymer composition and shaped articles made therefrom

The invention relates to storage-stable, curable silane-modified ethylene polymer compositions comprising a silane compound, an ethylene polymer, and a free-radical generating agent which compositions can be shaped and cured to provide articles having a variety of uses.

United States Patent No. 3,646,155 discloses that a silane-modified ethylene polymer composition produced by reacting a certain silane compound with an ethylene polymer (such as polyethylene or a copolymer consisting primarily of ethylene) in the presence of a free radical generating agent can be cross-linked by exposure to water in the presence of a silanol-condensation catalyst. Silane-modified ethylene polymer compositions cross-linked in this way can have any desired cross-link density, and have excellent heat resistance, weather resistance and chemical resistance; as a result, they are useful in the manufacture of pipes, electrical insulation materials and films, and are also suitable in the manufacture of foamed articles.

However, known silane-modified ethylene polymer compositions absorb moisture from the atmosphere and the cross-linking reaction proceeds gradually even in the absence of a silanol-condensation catalyst. This reduces melt indices and adversely affects mouldability. Because of these defects, it has been necessary to adopt special storing methods when long-term storage is needed in order to inhibit the atmospheric cross-linking reaction.

There have been proposals to utilise zinc oxide in silane-modified ethylene polymer compositions. French Patent Specification No. 1,532,347 suggests using an inorganic filler, including such metal oxides as zinc oxide, to support an organosilane and then mixing the filler with a polyolefin, such as polyethylene, under conditions such that a cured product of improved tensile properties is obtained. French Patent Specification No. 2,294,196 proposes the use of materials which react to form water for cross-linking purposes and mentions the joint use of fatty acids and non hygroscopic metal oxides, including zinc oxide, which react together to form an inert substance (metal salt) and water. Neither reference is concerned with storage-stable, curable silane-modified ethylene polymer compositions.

It has now been found that a curable silane-modified ethylene polymer composition having a reduced tendency to change with time can be obtained by reacting an ethylene polymer with a silane compound in the presence of zinc oxide, and that this reaction can be effected without a decrease in the grafting efficiency of the silane compound.

The present invention therefore provides a curable silane-modified ethylene polymer composition comprising a melt-kneaded mixture of an alkoxy-silane compound having at least one ethylenically unsaturated radical, a free radical-generating agent and an ethylene polymer, characterised in that the composition is rendered storage stable by effecting the melt-kneading in the presence of zinc oxide.

The ethylene polymer which can be used in this invention includes not only polyethylene but also copolymers containing the ethylene as a principal component (preferably in an amount of at least 50 mol%), e.g. ethylene/vinyl acetate copolymers, and ethylene/vinyl chloride copolymers. Both low density polyethylene and high density polyethylene can be used as ethylene polymer.

The alkoxy-silane compound which is used in this invention generally includes organic silicon compounds which have at least one unsaturated hydrocarbon radical (e.g. a vinyl or allyl radical) or at least one unsaturated hydrocarbonyloxy radical (e.g.

$$CH_2=C(CH_3)COO(CH_2{-})_3\ ,\ CH_2=C(CH_3)COOCH_2CH_2O(CH_2{-})_3 \quad \text{and}$$

$$CH_2=C(CH_3)COOCH_2CH_2OCH_2\underset{\substack{|\\ OH}}{C}HCH_2O(CH_2)_3) \quad \text{and}$$

which have at least two alkoxy radicals (such as methoxy, ethoxy or butoxy). In particular, silane compounds in which the unsaturated radical is vinyl and in which the alkoxy radical is methoxy or ethoxy are suitable, and vinyltrimethoxysilane or vinyltriethoxysilane are preferred.

The alkoxy-silane compound may be used in an amount of 0.1 to 30 parts by weight, preferably 0.5 to 10 parts by weight, per 100 parts by weight of the ethylene polymer.

The free radical-generating agent which is used in this invention is a compound which decomposes to generate free radicals when heated. It is used as a reaction initiator for chemically bonding the alkoxy-silane compound to the ethylenic resin. Compounds having a half life of not more than 3 minutes at a temperature above the melting point of the ethylene polymer but not exceeding 150°C are preferred as the free radical generator. use of such a free radical-generating agent makes it possible to carry out the chemical bonding reaction quickly.

Specific examples of free radical-generating agent which can be used are organic peroxides such as benzoyl peroxide and lauryl peroxide, and organic peresters such as t-butyl peracetate, t-butyl peroxy-2-ethylhexanoate and t-butyl peroxyisobutylate.

The amount of the free radical generator to be used depends upon the kind of ethylene polymer

and the amount of alkoxy-silane compound, and is difficult to determine definitely. However, too much free radical generator tends to induce cross-linking of the ethylene polymer alone, and causes trouble during melt-kneading. On the other hand, if the account of free radical generator is too small, it is difficult to carry out the bonding reaction between the ethylene polymer and the alkoxy-silane compound to a sufficient degree. Preferably, therefore, the free radical generator is used in an amount of 0.01 to 1.5 parts by weight per 100 parts by weight of the ethylene polymer.

In accordance with this invention a mixture is made of the aforementioned ethylene polymer, alkoxy-silane compound and free-radical-generating agent, and is melt-kneaded. At the time of this melt-kneading, zinc oxide is present in the mixture. Apart from this there is no limitation concerning the time of adding the zinc oxide. It may be added before the melt-kneading (viz. it may be added to an initial mixture), or it may be added after an initial mixture of the other ingredients has been completely melted.

Moreover, there is no limitation regarding the amount of zinc oxide to be incorporated. Preferably, however, the amount is not more than 50 parts by weight per 100 parts by weight of the ethylene polymer, and more preferably not more than 10 parts by weight; and at the time it is preferably 10 to 500 parts by weight, more preferably 50 to 200 parts by weight, per 100 parts by weight of the alkoxy-silane compound.

The curable ethylene polymer composition thus obtained is silane-modified and contains zinc oxide. The zinc oxide suppresses premature cross-linking of the silane, but upon curing a silane-modified ethylene polymer composition having any desired cross-linking density, as with silane-modified ethylene polymer compositions of the prior art, can be obtained. The cross-linked silane-modified ethylene polymer composition of the invention has the advantage of superior heat resistance, weather resistance, and chemical resistance. The curable composition of the invention undergoes less change in melt index and in mouldability with the passage of time than a similar composition not containing zinc oxide.

The following Example illustrates this invention. All "parts" in the example are "parts by weight."

## Example

| | |
|---|---|
| Low density polyethylene (melt index 4, density 0.927 g/cm$^3$) | 100 parts |
| Vinyltriethoxysilane | 1.5 parts |
| 2,5-Dimethyl-2,5-di (t-butyl-peroxy)hexane | 0.15 part |
| Zinc oxide | 1.0 part |

The above ingredients are fed to a supermixer, and mixed for two minutes. The mixture is supplied to a single screw extruder having a barrel temperature of 200—240°C and a die temperature of 180°C, and extruded to form a silane-modified ethylenic resin sheet having a thickness of about 1 mm. Samples taken from the resulting sheet are stored in a constant-temperature chamber (temperature 20°C, humidity 60%) (A) and in a laboratory room (May to October) (B). At the fixed times shown in the Table the melt indices (in accordance with JISK-6760) of the samples are measured, and used as a measure for mouldability. The results are shown in the Table below.

A comparison of these results with the following comparative Example shows that the modified resin containing zinc oxide has a higher melt index and better mouldability, even after the passage of time.

## Comparative Example

The Example is repeated except that the zinc oxide is not added. The melt indices of samples measured in the same way as in the Example are shown in the Table.

TABLE

| Lapse of Time | Example A | Example B | Comparative Example A | Comparative Example B |
|---|---|---|---|---|
| Immediately after manufacture | 2.4 | 2.4 | 2.3 | 2.3 |
| 4 days | 2.3 | 2.3 | 1.9 | 1.9 |
| 11 days | 2.2 | – | 1.6 | – |
| 34 days | 1.8 | 1.6 | 1.3 | 1.1 |
| 60 days | 1.7 | – | 1.04 | – |
| 111 days | – | 0.97 | – | 0.44 |
| 140 days | – | 0.95 | – | 0.30 |

(Note:) A: Constant-temperature chamber: temperature 20°C, humidity 60%

B: Laboratory (May to October)

**Claims**

1. A curable silane-modified ethylene polymer composition comprising a melt-kneaded mixture of an alkoxy-silane compound having at least one ethylenically unsaturated radical, a free radical-generating agent and an ethylene polymer, characterised in that the composition is rendered storage stable by effecting the melt-kneading in the presence of zinc oxide.

2. A polymer composition according to claim 1, characterised by a zinc oxide content of not more than 50 parts by weight per 100 parts by weight of the ethylene polymer, and of 10 to 500 parts by weight per 100 parts by weight of the alkoxy-silane compound.

3. A polymer composition according to claim 1 or 2 characterised in that the alkoxy-silane compound is vinyltrimethoxysilane or vinyltriethoxysilane.

4. Shaped articles obtained by moulding and curing a silane-modified ethylene polymer composition as claimed in claim 1, 2 or 3.

**Revendications**

1. Composition polymère durcissable d'éthylène modifié par du silane comprenant un mélange malaxé à l'état fondu d'un composé alcoxysilane ayant au moins un radical éthyléniquement insaturé, d'un agent générateur de radicaux libres et d'un polymère d'éthylène, caractérisée par le fait que la composition est rendue stable au stockage en effectuant le malaxage à l'état fondu en présence d'oxyde de zinc.

2. Composition polymère selon la revendication 1, caractérisée par une quantité d'oxyde de zinc ne dépassant pas 50 parties en poids pour 100 parties en poids du polymère d'éthylène, et de 10 à 500 parties en poids pour 100 parties en poids du composé alcoxy-silane.

3. Composition polymère selon les revendications 1 ou 2, caractérisée par le fait que le composé alcoxy-silane est le vinyl-triméthoxysilane ou le vinyltriéthoxysilane.

4. Articles mis en forme obtenus en moulant et en durcissant une composition polymère d'éthylène modifié par du silane telle que définie dans l'une quelconque des revendications 1, 2 et 3.

Patentansprüche

1. Härtbare Silan-modifizierte Polyäthylen-Masse in Form eines schmelzgekneteten Gemischs eines Alkoxysilans, enthaltend mindestens eine äthylenisch ungesättigte Gruppe, einer freie Radikale bildenden Substanz und einen Athylen-Polymeren, dadurch gekennzeichnet, daß es zur Verbesserung der Lagerbeständigkeit in Gegenwart von Zinkoxid geknetet worden ist.

2. Masse nach Anspruch 1, dadurch gekennzeichnet, daß der Zinkoxidgehalt nicht mehr als 50 Gew.-Teile, bezogen auf 100 Gew.-Teile Polyäthylen, und 10 bis 500 Gew.-Teile, bezogen auf 100 Gew.-Teile Alkoxysilan, beträgt.

3. Masse nach Anspruch 1 oder 2, dadurch gekennzeichnet, daß das Alkoxysilan Vinyltrimethoxysilan oder Vinyltriäthyloxysilan ist.

4. Formkörper hergestellt durch Formen und Härten der Massen nach Anspruch 1 bis 3.